# FASCICULE DE BREVET EUROPEEN

(11) **EP 3 047 530 B1**
(45) Date de publication et mention de la délivrance du brevet: **03.04.2019**
(21) Numéro de dépôt: 14784305.6
(22) Date de dépôt: 16.09.2014
(51) Int. Cl.: H01M 2/02, H01M 2/06, H01M 4/04, H01M 4/1395, H01M 4/134, H01M 4/38, H01M 4/66, H01M 4/70, H01M 6/40, H01M 10/04, H01M 10/052, H01M 10/0562, H01M 10/0585

(54) **PROCEDE DE REALISATION D'UNE MICROBATTERIE AU LITHIUM ET MICROBATTERIE AU LITHIUM**
VERFAHREN ZUR HERSTELLUNG EINER LITHIUMMIKROBATTERIE UND LITHIUMMIKROBATTERIE
LITHIUM MICROBATTERYMETHOD FOR PRODUCING A LITHIUM MICROBATTERY

(30) Priorité: 16.09.2013 FR 1302149
(43) Date de publication de la demande: 27.07.2016
(73) Titulaire: Commissariat à l'Énergie Atomique et aux Énergies Alternatives, 75015 Paris (FR)
(72) Inventeur: OUKASSI, Sami, F-38120 Saint-Egrève (FR); SALOT, Raphaël, F-38250 Lans-en-Vercors (FR); MARTIN, Steve, F-38160 Saint-Sauveur (FR)
(74) Mandataire: Talbot, Alexandre
(86) Numéro de dépôt international: PCT/FR2014/052307
(87) Numéro de publication internationale: WO 2015/036720

(56) Documents cités:
- WO-A1-01/73873
- WO-A2-2005/067645
- US-A1- 2004 029 311
- US-A1- 2012 177 998
- US-B1- 6 168 884
- OKITA K ET AL: "Stabilizing lithium plating-stripping reaction between a lithium phosphorus oxynitride glass electrolyte and copper thin film by platinum insertion", JOURNAL OF POWER SOURCES, ELSEVIER SA, CH, vol. 196, no. 4, 15 février 2011 (2011-02-15), pages 2135-2142, XP027531145, ISSN: 0378-7753 [extrait le 2010-11-26]

## Description

### Domaine technique de l'invention

L'invention est relative à la formation d'une couche de lithium métallique pour, notamment pour réaliser une microbatterie au lithium.

### État de la technique

Une microbatterie au lithium est un accumulateur électrochimique mettant en jeu les ions Li⁺ et comportant un empilement actif de couches minces. L'empilement actif est formé par deux électrodes, positive et négative, séparées par un électrolyte solide.

L'électrolyte solide est un isolant électrique ayant une forte conductivité ionique, il est généralement à base d'un composé lithié. Par ailleurs, l'électrode positive est un matériau d'insertion du lithium, par exemple les oxydes de métaux lithiés.

Les microbatteries au lithium dites « lithium-métal » comportent une électrode négative en lithium métallique. En outre, les microbatteries au lithium dites « lithium-ion » comportent une électrode négative formée par un matériau d'intercalation ou d'insertion du lithium.

Les microbatteries au lithium sont particulièrement intéressantes grâce à leur forte densité massique, et leur faible toxicité. Cependant, une microbatterie au lithium, notamment l'électrolyte solide et l'électrode négative, est très sensible à l'air et à l'humidité. De ce fait, une attention particulière doit être portée aux différentes étapes de réalisation et d'encapsulation d'une microbatterie au lithium.

Pour la fabrication d'une microbatterie, une technique classique consiste à déposer successivement les couches minces de la micro-batterie, notamment par des techniques de dépôt sous vide.

Les couches à base de lithium sont très réactives et très instables chimiquement. En effet, la présence de lithium et, dans certains cas de soufre, dans des couches minces formant une microbatterie, confère à ces couches un caractère fortement hygroscopique et une instabilité chimique à l'air. Ainsi, les couches minces à base de lithium, notamment les couches en lithium métallique, sont difficiles à structurer.

La structuration d'une couche de lithium métallique est généralement réalisée en utilisant un masquage mécanique (« shadow masking » selon la terminologie anglosaxonne). Le dépôt sous vide, PVD par exemple (« Physical Vapor Déposition »), peut être réalisé à travers un masque mécanique présentant des évidements. Le masque est posé sur le substrat et maintenu en position pendant la durée du dépôt. Ensuite, le masque mécanique est retiré et le substrat présente les motifs souhaités. Cette technique de masquage génère une contamination particulaire, et le masque mécanique peut également rayer la couche sur laquelle il est déposé, risquant ainsi, d'endommager fortement la microbatterie. Par ailleurs, lorsque la taille de la microbatterie est réduite, le masque mécanique peut générer des effets de bords qui s'avèrent néfastes pour un bon fonctionnement de la microbatterie.

En outre, le document [« Microfabrication process for patterning metallic lithium encapsulated electrodes », Applied Surface Science 256S (2009) S58-S60] divulgue une technique de structuration de couche de lithium métallique par arrachement ou décollage (« lift-off » en terminologie anglo-saxonne). Cette technique consiste à déposer pleine plaque une couche en PPX (PPX pour poly-para-xylylène) de 20 µm d'épaisseur sur un substrat à base de silicium comportant un empilement SiO₂/Si₃N₄. La couche en PPX est gravée pour définir des cavités débouchant sur la couche en Si₃N₄. Ensuite, un dépôt par évaporation du lithium métallique sur le substrat est réalisé. Enfin, la couche en PPX est retirée manuellement pour transférer des motifs en lithium métallique sur le substrat, notamment sur la couche en Si₃N₄. Cette technique reste cependant, difficile à mettre en oeuvre. Par ailleurs, les étapes de gravure et de retrait de la couche en PPX sont des étapes critiques, qui risquent de contaminer le substrat. Ce qui peut être néfaste, par exemple, pour un bon fonctionnement d'une microbatterie, ainsi que pour son procédé de réalisation.

WO2005/067645 divulgue un procédé de réalisation d'une microbatterie au lithium où une anode au lithium est déposée par germination à partir d'une première et une deuxième couches électriquement conductrices.

### Objet de l'invention

L'invention a pour objet un procédé de réalisation d'une microbatterie au lithium, facile à mettre en oeuvre, compatible avec les technologies et les méthodes de fabrication dans le domaine de la microélectronique, et permettant l'obtention d'une microbatterie performante et fiable. Le procédé de réalisation d'une microbatterie au lithium de l'invention est défini par la revendication 1. La microbatterie au lithium de l'invention est définie par la revendication 12.

On tend vers cet objet en prévoyant un procédé de réalisation d'une microbatterie au lithium, comportant les étapes successives suivantes :
- prévoir un substrat recouvert successivement et dans l'ordre par une cathode, un électrolyte solide, une première couche électriquement conductrice en un premier matériau, la première couche étant dépourvue de contact avec la cathode ;
- former une deuxième couche électriquement conductrice et configurée pour former une barrière de diffusion aux atomes de lithium, la deuxième couche étant connectée électriquement à la première couche et laissant découverte au moins une partie de la première couche, la dite partie faisant face à l'électrolyte ;
- déposer électrochimiquement une anode au lithium à partir de la germination depuis les première et deuxième couches électriquement conductrices de manière à former avec la première couche un film comportant du lithium et le premier matériau.

Selon un perfectionnement, le premier matériau est choisi de sorte que le film, comportant du lithium et le premier matériau, forme l'interface entre l'électrolyte solide et l'anode.

Par ailleurs, ledit film est préférentiellement en alliage à base de lithium et d'atomes du premier matériau.

Selon une mise en oeuvre préférentielle, le procédé comporte une étape de formation d'une première couche d'encapsulation hermétique et électriquement isolante sur une portion de la deuxième couche de manière à empêcher le dépôt électrochimique.

De manière avantageuse, l'électrolyte est muni de flancs latéraux reliés par une surface sensiblement parallèle et opposée au substrat, et en ce que la première couche est disposée sur le substrat et sur l'électrolyte de manière à recouvrir continûment lesdits flanc latéraux et ladite surface les reliant.

Le procédé peut comporter, de manière avantageuse, une ou plusieurs autres étapes, isolément ou en combinaison, en particulier parmi les étapes de :
- formation d'une deuxième couche d'encapsulation hermétique et électriquement isolante enrobant l'anode et l'électrolyte ;
- formation d'une deuxième couche recouvrant une portion de la première couche, ladite portion étant disposée sur le substrat ;
- utilisation d'une première couche à base d'un matériau de la liste comportant le silicium dopé, le germanium dopé, Sn, Al, Au et Pt ;
- formation de la deuxième couche à base d'un matériau de la liste comportant Ti, Ni, W, et Mo, Cr ou d'un alliage à partir de ces éléments ;
- formation d'une anode ayant une épaisseur supérieure à 2 fois l'épaisseur de la première couche, de préférence supérieure à 10 fois l'épaisseur de la première couche ;
- formation d'une anode et d'une première couche ayant des épaisseurs choisies de manière que le premier matériau de la première couche soit consommé pour former le film, comportant du lithium et le premier matériau, le film séparant l'électrolyte et l'anode.

On tend vers un des objets de l'invention en prévoyant également une microbatterie au lithium munie d'un substrat recouvert successivement, et dans l'ordre, par une cathode, un électrolyte solide, une première couche électriquement conductrice à base d'un matériau configuré pour s'allier avec les atomes de lithium, la première couche étant dépourvue de contact avec la cathode. La microbatterie comporte en outre, une deuxième couche électriquement conductrice et configurée pour former une barrière de diffusion aux atomes de lithium. Cette deuxième couche est connectée électriquement à la première couche de manière à laisser découverte au moins une partie de la première couche. Par ailleurs, la partie découverte de la première couche est disposée de sorte à faire face à l'électrolyte. La microbatterie dispose également d'une zone de la deuxième couche configurée pour former une prise de contact de la microbatterie, et une anode au lithium disposée sur les première et deuxième couches électriquement conductrices de manière à laisser découverte ladite zone de la deuxième couche. L'anode est en contact avec les première et deuxième couches. Avantageusement, la microbatterie comporte une première couche d'encapsulation hermétique et électriquement isolante disposée sur la deuxième couche de manière à séparer ladite zone, de la première couche et de l'anode.

De manière préférentielle, la microbatterie comporte en outre une deuxième couche d'encapsulation hermétique et électriquement isolante, enrobant l'anode.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, de manière schématique, en vue de coupe, des étapes successives de réalisation d'une couche de lithium métallique d'une microbatterie selon un premier mode de mise en oeuvre ;
- les figures 3 et 4 représentent, de manière schématique, en vue de coupe, deux autres modes de mise en oeuvre d'une microbatterie au lithium ;
- la figure 5 représente, de manière schématique, en vue de coupe, un agrandissement d'un empilement réalisé selon le mode de réalisation de la figure 3 ;
- les figures 6 et 7 représentent respectivement, de manière schématique, des vues de dessus, correspondant aux figures 2 et 3.

### Description de modes de réalisation préférentiels de l'invention

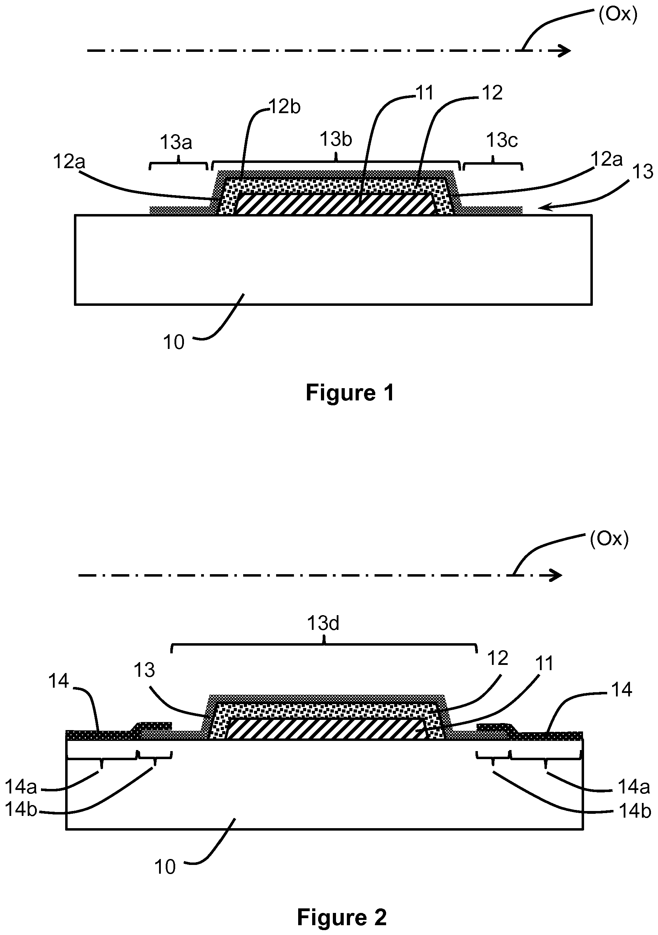

Comme illustré aux figures 1 à 4, un procédé de réalisation d'une microbatterie au lithium comporte l'utilisation d'un substrat muni d'un empilement de couches actives. En fait, le procédé comporte une première étape consistant à prévoir un substrat 10 recouvert successivement, et dans l'ordre, par une cathode 11, un électrolyte solide 12, préférentiellement à base de lithium et une première couche 13 électriquement conductrice (figure 1). La première couche est en un premier matériau.

Préférentiellement, la première couche 13 est à base d'un matériau configuré pour s'allier avec les atomes de lithium. Autrement dit, les atomes du premier matériau et les atomes de lithium forment un alliage. La notion d'alliage est à interpréter au sens large, comme un mélange d'atomes qui ne sont pas forcément en interaction entre eux. En outre, la première couche 13 est dépourvue de contact avec la cathode 11.

Les couches formant la cathode 11 et l'électrolyte solide 12 peuvent être réalisées successivement sur le substrat 10 par des techniques classiques de l'industrie microélectronique par exemple par dépôt physique en phase vapeur (« Physical Vapor Deposition », PVD), dépôt par évaporation sous vide, dépôt chimique en phase vapeur (« Chemical Vapor Deposition », CVD). L'épaisseur des couches minces 11 et 12 peut varier entre quelques nanomètres et quelques dizaines de micromètres.

Par ailleurs, le substrat 10 est généralement une plaque de silicium, pouvant comporter un circuit intégré. Le substrat 10 peut également être en verre ou en céramique. Le substrat 10 peut être recouvert, par une couche de passivation, typiquement à base d'oxyde de silicium, ou par une bicouche formée par une couche d'oxyde et une couche de nitrure de silicium. Le substrat 10 peut également former la cathode 11.

Par cathode 11 on entend généralement une électrode génératrice d'ion Li⁺ ou comportant un matériau d'intercalation du lithium. Le matériau utilisé comme matériau actif de la cathode 11 peut être un matériau non lithié comme un oxyde de vanadium (VₓO_{y}), de tungstène (WOₓ), ou encore de molybdène (MoOx) ou un oxysulfure de titane (TiOₓS_{y}). Le matériau de la cathode 11 peut également être un matériau lithié comme un oxyde de lithium et de cobalt (LiCoO₂), un oxyde de lithium et de manganèse (LiMn₂O₄), un oxyde de lithium et de titane (Li₄Ti₅O₁₂), un phosphate de fer et de lithium (LiFePO₄) ou un oxyde de lithium et de nickel (LiNiO₂), etc.

En outre, le substrat 10 peut également comporter d'autres couches minces, notamment des couches formant des collecteurs de courant de la microbatterie. Classiquement, ces collecteurs de courant sont formés par des couches métalliques, par exemple en platine, chrome, or, titane, etc. L'étape de réalisation de ces collecteurs de courant est indépendante de l'étape de formation de l'empilement des couches actives sur le substrat 10. Autrement dit, les collecteurs de courant de la microbatterie peuvent être réalisés avant, pendant, ou après l'étape de formation de la cathode 11 et de l'électrolyte solide 12.

Comme illustré à la figure 1, la couche d'électrolyte solide 12 est disposée sur la cathode 11 de manière à la recouvrir. De manière préférentielle, l'électrolyte 12 enrobe la cathode 11. L'électrolyte 12 est à base d'un matériau permettant la conduction des ions lithium Li⁺. Préférentiellement, le matériau de l'électrolyte solide 12 est à base de lithium, et il est électriquement isolant. L'électrolyte solide 12 peut être en oxynitrure de bore et de lithium (LiBON), en oxynitrure de silicophosphate et de lithium (LiSiPON), etc. De manière préférentielle, l'électrolyte solide 12 est en oxynitrure de phosphore et de lithium (LiPON) dit « lipon ».

La première couche 13 est disposée sur l'électrolyte solide 12 de sorte qu'elle soit dépourvue de contact avec la cathode 11. La première couche 13 recouvre l'électrolyte solide 12, et elle s'étend, préférentiellement, le long d'un axe longitudinal (Ox) de manière à recouvrir longitudinalement l'électrolyte solide 12.

Selon un mode préférentiel de réalisation, l'électrolyte solide 12 est muni de flanc latéraux 12a reliés par une surface 12b opposée au substrat 10, et préférentiellement sensiblement parallèle. La première couche 13 comporte préférentiellement une portion 13a disposée directement sur le substrat 10. Selon ce mode préférentielle de réalisation, la première couche 13 est avantageusement disposée sur le substrat 10 et sur l'électrolyte 12 de manière à recouvrir continûment lesdits flancs latéraux 12a et ladite surface 12b les reliant.

Autrement dit, comme représenté à la figure 1, la première couche 13 s'étend longitudinalement et comporte de manière continue et successive une première portion 13a disposée sur le substrat 10, une deuxième portion 13b disposée sur l'électrolyte solide 12, et une troisième portion 13c disposée sur le substrat 10.

Avantageusement, la première couche 13 est à base d'un matériau de la liste comportant l'étain (Sn), l'aluminium (Al), l'or (Au), le platine (Pt), le silicium dopé, et le germanium dopé. Autrement dit, le premier matériau comporte des atomes d'étain (Sn), d'aluminium (Al), d'or (Au), de platine (Pt), ou encore la première couche 13 est une couche de silicium dopé ou de germanium dopé. Préférentiellement, la couche 13 a une épaisseur allant de 5 à 50 nm. La première couche 13 peut être formée selon toute technique connue et compatible avec les matériaux des différentes couches disposées sur le substrat 10. La première couche 13 peut être déposée sélectivement ou sur toute la surface du substrat 10. La couche 13 peut être déposée, par exemple, par PVD, CVD, évaporation, etc. Par ailleurs, la structuration de la couche 13 peut être réalisée en utilisant une étape de photolithographie, ou tout autre moyen.

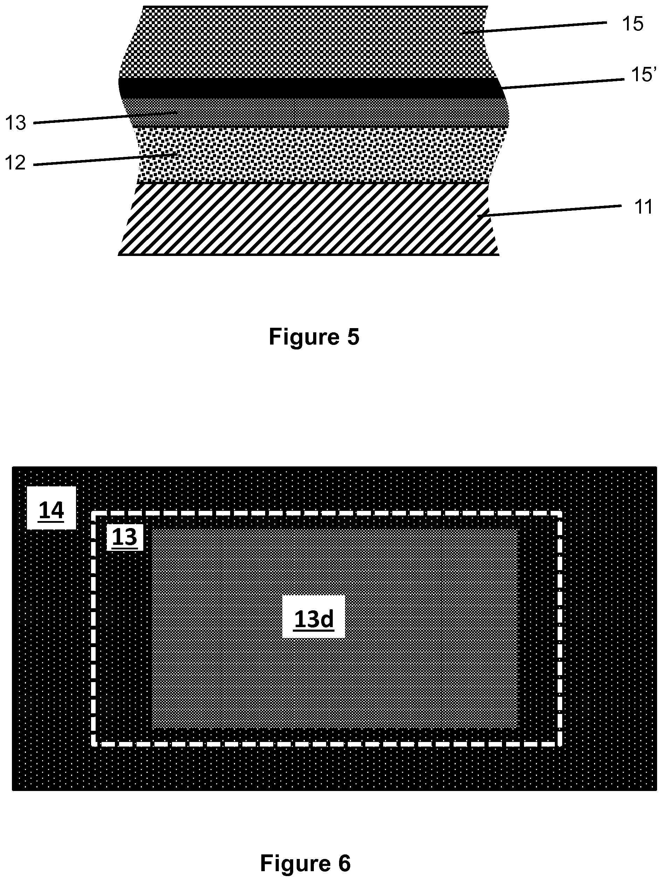

En outre, le procédé de réalisation comporte une étape de formation d'une deuxième couche 14 électriquement conductrice (figure 2 et 6). Le matériau de la deuxième couche 14 et sa disposition sont choisis de sorte que la couche 14 soit configurée pour former une barrière de diffusion aux atomes de lithium. Autrement dit, la couche 14 est configurée pour empêcher la diffusion des atomes ou des ions de lithium provenant notamment de l'électrolyte solide 12 via la première couche 13.

A titre d'exemple, l'article « Deposition of TiN and TaN by Remote Plasma ALD for Cu and Li Diffusion Barrier Applications », de H. C. M. Knoops et al. publié dans Journal of the Electrochemical Society, 155 (12) G287-G294, 2008, divulgue une étude concernant deux couches électriquement conductrices en TiN et en TaN et leur efficacité pour bloquer la diffusion du lithium. Des mesures électriques sur des structures test comportant respectivement des couche de 60 nm de TaN et de TiN interposées entre une couche en lithium et un substrat en silicium ont été effectuées. Les résultats de ces mesures ont montré que les atomes de lithium traversent la couche de TaN et diffusent dans le substrat en silicium. Alors que les atomes de lithium n'arrivaient pas à traverser la couche en TiN et pénétrer dans le substrat. Selon cet article, il a été montré qu'une couche en TiN représente une barrière de diffusion aux atomes de lithium, empêchant les atomes de lithium de traverser ladite couche en TiN. Par ailleurs, une couche en TaN, déposée selon les conditions expérimentales de l'article, n'était pas en mesure de bloquer la diffusion des atomes de lithium et former une barrière de diffusion aux atomes de lithium.

La deuxième couche 14 est également disposée de manière à être électriquement connectée à la première couche 13. Autrement dit, les première 13 et deuxième 14 couches sont en contact direct.

Avantageusement, la deuxième couche 14 est à base d'un matériau de la liste comportant le titane (Ti), le nickel (Ni), le tungstène (W) et le molybdène (Mo). Par ailleurs, la couche 14 peut également être à base d'un alliage formé à partir d'un ou plusieurs éléments de la liste précédente. La deuxième couche 14 peut être déposée, par exemple, par PVD, CVD, évaporation, etc. Par ailleurs, la deuxième couche 14 peut être déposée sélectivement ou en pleine plaque sur le substrat 10, et sa structuration peut être réalisée en utilisant une étape de photolithographie, ou toute autre technique classique. Préférentiellement, la couche 14 a une épaisseur allant de 10 à 500 nm.

Par ailleurs, la deuxième couche 14 est disposée de manière à laisser découverte au moins une partie 13d de la première couche 13. La partie découverte 13d fait face à l'électrolyte solide 12.

De manière avantageuse, la deuxième couche 14 recouvre une portion de la première couche 13, ladite portion étant disposée sur le substrat 10. Autrement dit, cette partie de recouvrement est formée par un empilement : deuxième couche 14 / première couche 13 / substrat 10.

Selon le mode préférentiel de réalisation illustré à la figure 2 et à la figure 6 (une vue de dessus de la figure 2), la deuxième couche 14 comporte une première portion 14a disposée directement sur le substrat 10 et une deuxième portion 14b recouvrant la première portion 13a et/ou la deuxième portion 13b de la première couche 13.

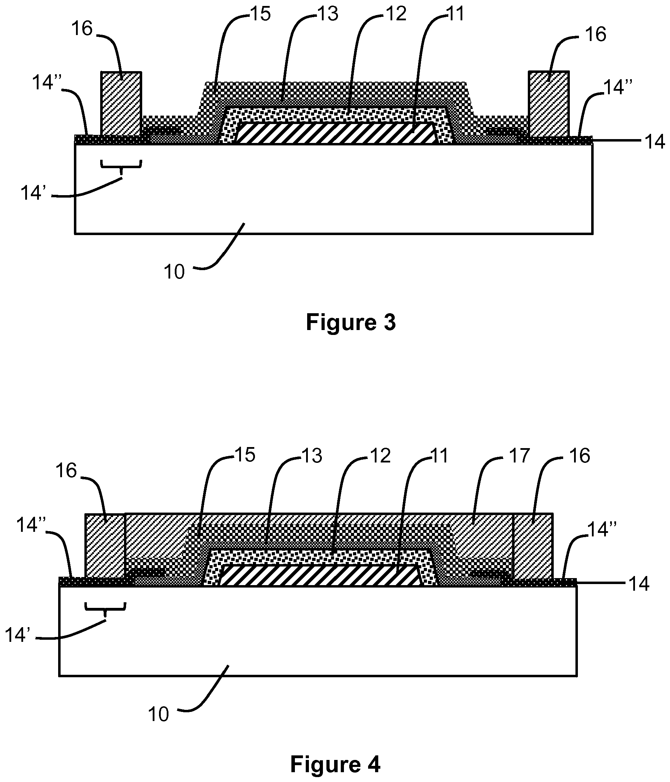

Comme illustré à la figure 3, le procédé comporte une étape de dépôt électrochimique d'une anode au lithium 15. Comme illustré aux figures 3 et 5, le dépôt est réalisé à partir de la germination depuis les première 13 et deuxième 14 couches électriquement conductrices de manière à former avec la première couche 13 un film 15' comportant du lithium et le premier matériau de la couche 13.

Préférentiellement, le premier matériau de la première couche 13 est choisi de manière que le film 15' forme l'interface entre l'électrolyte solide 12 et l'anode 15 au lithium. Autrement dit, on obtient un empilement comportant successivement l'électrolyte solide 12, le film 15' et l'anode 15 au lithium.

Avantageusement, le film 15' formé après le dépôt de l'anode 15, est en alliage à base de lithium et d'atomes du premier matériau.

Par ailleurs, on entend par alliage, un mélange d'atomes de lithium et d'atomes du premier matériau de la première couche 13. Les atomes de lithium dudit mélange participent aux mouvements de migration au cours du fonctionnement de la microbatterie réalisée par le procédé. Les atomes de lithium dudit alliage, autrement dit compris dans le film 15', sont actifs et ne sont pas bloqués dans cet alliage.

Selon un exemple de réalisation, les couches de germination 13 et 14 sont respectivement à base d'étain et de titane. La couche 13 en étain a une épaisseur d'environ 50 nm, et la couche 14 en titane a une épaisseur d'environ 250 nm. Par ailleurs, selon cet exemple de réalisation, l'anode au lithium 15 est réalisée en utilisant un bain d'électrodépôt comportant un solvant à base de carbonate d'éthylène et de carbonate de diméthyle en rapport volumique égale (EC-DMC 1:1), et un sel de lithium hexafluorophosphate (LiPF6 1M). La densité de courant appliquée dans le bain est comprise entre 0,5 et 2 mA/cm².

De manière avantageuse, l'épaisseur de l'anode au lithium 15 est 2 fois, et plus avantageusement 10 fois supérieure à l'épaisseur de la première couche 13.

Préférentiellement, l'épaisseur de l'anode 15 est choisie en fonction du matériau de la première couche 13 et de son épaisseur. En fonction du diagramme binaire du système sélectionné (lithium, matériau de l'anode 15 / matériau de la première couche 13), autrement dit en fonction du matériau de la couche 13, l'épaisseur de l'anode 15 et l'épaisseur de la première couche 13 sont choisies de manière que l'interface anode 15 / électrolyte 12 soit formée par un alliage lithium-matériau de la première couche 13. Selon un mode de réalisation avantageux, l'épaisseur de l'anode 15 et l'épaisseur de la première couche 13 sont choisies de manière que le premier matériau de la première couche 13 soit consommé pour former le film 15' séparant l'électrolyte solide 12 de l'anode 15 au lithium. Autrement dit, le film 15' constitue une interface entre l'électrolyte 12 et l'anode 15.

Selon l'exemple de réalisation, l'épaisseur de l'anode au lithium 15 est d'environ 5 µm pour une épaisseur de 50 nm de la couche 13 en étain. Le choix des épaisseurs de ces couches, ainsi que du matériau de la couche 13 a permis la formation d'un alliage lithium-étain avec un pourcentage en masse de lithium d'environ 88%.

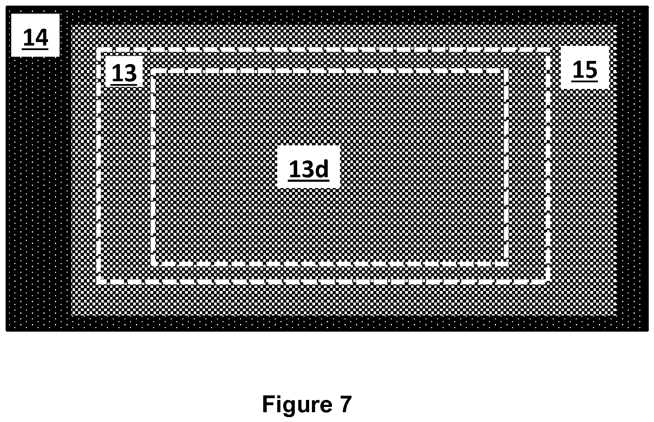

Selon un mode de réalisation préférentiel illustré aux figures 3 et 7, on réalise une étape de formation d'une première couche d'encapsulation 16 hermétique et électriquement isolante sur une portion 14' de la deuxième couche 14. La couche 16 n'est pas représentée à la figure 7. Cette étape est effectuée avant le dépôt électrochimique de manière que la première couche d'encapsulation 16 empêche le dépôt de la couche d'anode 15 sur ladite portion 14' de la couche 14.

La couche d'encapsulation 16 a comme principal objet la formation d'une barrière de protection inerte et étanche pour les couches actives de la microbatterie. En outre, la couche d'encapsulation 16 permet, de manière avantageuse, la structuration de l'anode au lithium 15 en empêchant le dépôt électrochimique sur une ou plusieurs portions de la deuxième couche 14.

La couche d'encapsulation 16 peut être à base de différents matériaux ayant des caractéristiques électriques, thermomécaniques et chimiques compatibles avec les composants et le fonctionnement de la microbatterie. A titre d'exemple, la couche d'encapsulation 16 peut être une couche d'epoxy, ou une couche de polymère à base d'époxy acrylate, ou encore une couche d'oxyde ou d'alumine, etc. Selon la nature de la couche d'encapsulation 16, elle peut être réalisée par un dépôt à la tournette (« spin coating » selon la terminologie anglo-saxonne), ou par dépôt PVD, etc.

Ainsi, la deuxième couche 14 peut former ou comporter une prise de contact électrique de la microbatterie réalisée sur le substrat 10 tout en évitant la migration des atomes de lithium vers ladite prise de contact. De manière préférentielle, une telle prise de contact est formée dans une zone 14" de la deuxième couche 14 séparée des couches actives de la microbatterie (cathode11/électrolyte12/anode15) par la première couche d'encapsulation 16.

Une présence des atomes de lithium dans des zones non encapsulées de la microbatterie, notamment ladite prise de contact, peut entrainer une oxydation du lithium ou de l'alliage le comportant, dégradant ainsi ces zones. Par exemple, une oxydation du lithium au niveau des contacts électriques de la microbatterie, peut entrainer une augmentation de la résistance de contact, voire la rupture complète de ce dernier. De ce fait, la nature et la disposition astucieuses de la deuxième couche 14 permettent de réaliser une microbatterie fiable ayant un bon fonctionnement électrochimique et un bon rendement.

Selon un autre mode de réalisation illustré à la figure 4, une deuxième couche d'encapsulation 17 hermétique et électriquement isolante est formée sur l'empilement comportant l'anode 11, la cathode 15 et l'électrolyte 12. La couche 17 est formée de manière à enrober l'anode 15 et l'électrolyte 12. Ainsi, les première 16 et deuxième 17 couches d'encapsulation forment de manière avantageuse une encapsulation de la microbatterie réalisée sur le substrat 10.

Par ailleurs, les première 16 et deuxième 17 couches d'encapsulation peuvent être surmontées d'une couche additionnelle d'encapsulation. En particulier lorsqu'une couche d'encapsulation en polymère est déposée directement sur les composants de la microbatterie, une couche additionnelle est généralement utilisée. En effet, les matériaux polymères peuvent être perméables à certains contaminants qui peuvent réagir avec les couches actives de la microbatterie, ce qui nécessite l'adjonction d'une couche additionnelle formant un bouclier contre les contaminants.

Le procédé de réalisation décrit ci-dessus est avantageusement un procédé facile à réaliser qui permet de réduire le coût et la complexité de fabrication des microbatteries à grande échelle. Le procédé permet notamment la structuration de l'anode en lithium en se passant de l'utilisation d'un masque dur ou d'une autre technique difficile à mettre en oeuvre.

En effet, le procédé utilise deux couches de germination électriquement conductrices pour réaliser un dépôt électrochimique de l'anode en lithium de manière efficace et facile. En outre, le procédé permet de manière avantageuse, une structuration facile à réaliser de l'anode en lithium, en déposant partiellement une couche d'encapsulation électriquement isolante sur une des deux couches de germination, avant le dépôt électrochimique de l'anode en lithium. De plus, ladite couche d'encapsulation forme également une protection pour la microbatterie.

Le procédé utilise de manière astucieuse une couche de germination présentant une barrière de diffusion aux atomes de lithium, pour le dépôt de l'anode en lithium et la formation d'une prise de contact de la microbatterie. Grâce à la barrière de diffusion formée par la couche de germination, ladite prise de contact évite une contamination générée par la migration des atomes de lithium. Ainsi, le procédé permet la fabrication de microbatteries fiables, ayant un bon fonctionnement électrochimique et un bon rendement.

En effet, pour augmenter le degré de performance et de fiabilité d'une microbatterie au lithium, l'isolation des couches actives, des autres éléments de la microbatterie, est considérée comme l'un des points clés. On tend vers cet objet en prévoyant une microbatterie au lithium ayant un agencement d'éléments empêchant, notamment, la migration des atomes de lithium des couches actives vers les zones non encapsulées, par exemples les prises de contact électrique de la microbatterie.

Selon un mode de réalisation illustré à la figure 3, une microbatterie au lithium est munie d'un substrat 10 recouvert successivement par : une cathode 11, un électrolyte solide 12 préférentiellement à base de lithium, et une première couche 13 électriquement conductrice à base d'un matériau configuré pour s'allier avec les atomes de lithium. La première couche 13 est dépourvue de contact avec la cathode 11.

En outre, la microbatterie comporte une deuxième couche 14 électriquement conductrice et configurée, de manière avantageuse, pour former une barrière de diffusion aux atomes de lithium. La deuxième couche 14 est, par ailleurs, connectée électriquement à la première couche 13 de sorte à laisser découverte au moins une partie 13d de la première couche 13. La partie découverte 13d est disposée de manière à faire face à l'électrolyte 12.

La microbatterie comporte également une anode 15 au lithium disposée sur les première 13 et deuxième 14 couches électriquement conductrices de manière à laisser découverte une zone 14" de la deuxième couche 14. Par ailleurs, la zone 14" comporte un contact électrique de la microbatterie disposé de manière à être distinct de l'anode.

De manière avantageuse, la microbatterie au lithium comporte une première couche d'encapsulation 16 hermétique et électriquement isolante disposée sur la deuxième couche 14 de manière à séparer ladite zone 14", de la première couche 13 et de l'anode 15. Cet agencement astucieux de la zone 14", destinée à comporter une prise de contact de la microbatterie, et des couches actives permet, de manière avantageuse d'éviter une migration des atomes de lithium de l'empilement des couches actives vers la zone 14" de la prise de contact. Une telle migration est néfaste pour la fiabilité et le bon fonctionnement de la microbatterie.

Comme illustré à la figure 4, la microbatterie au lithium comporte, en outre, une deuxième couche d'encapsulation 17 hermétique et électriquement isolante enrobant l'anode 15. Les couches d'encapsulation 16 et 17, ainsi que la disposition spéciale de la zone 14" permettent avantageusement une encapsulation efficace des couches actives de la microbatterie et une isolation de la zone 14" non encapsulée destinée à comporter une prise de contact de la microbatterie.

## Revendications

1. Procédé de réalisation d'une microbatterie au lithium, comportant les étapes successives suivantes :
• prévoir un substrat (10) recouvert successivement et dans l'ordre par :
- une cathode (11) ;
- un électrolyte solide (12) ;
- une première couche (13) électriquement conductrice en un premier matériau, la première couche (13) étant dépourvue de contact avec la cathode (11) ;
• former une deuxième couche (14) électriquement conductrice et configurée pour former une barrière de diffusion aux atomes de lithium, la deuxième couche (14) étant connectée électriquement à la première couche (13) et laissant découverte au moins une partie (13d) de la première couche (13), ladite partie (13d) faisant face à l'électrolyte (12) ;
• déposer électrochimiquement une anode (15) au lithium à partir de la germination depuis les première (13) et deuxième (14) couches électriquement conductrices de manière à former avec la première couche (13) un film (15') comportant du lithium et le premier matériau.

2. Procédé selon la revendication 1, **caractérisé en ce que** le premier matériau est choisi de sorte que le film (15') comportant du lithium et le premier matériau forme l'interface entre l'électrolyte solide (12) et l'anode (15).

3. Procédé selon l'une des revendications 1 et 2, **caractérisé en ce que** le film (15') est en alliage à base de lithium et d'atomes du premier matériau.

4. Procédé selon l'une quelconque des revendications 1 à 3, **caractérisé en ce qu'**il comporte une étape de formation d'une première couche d'encapsulation (16) hermétique et électriquement isolante sur une portion (14') de la deuxième couche (14) de manière à empêcher le dépôt électrochimique.

5. Procédé selon l'une quelconque des revendications 1 à 4, **caractérisé en ce que** l'électrolyte (12) est muni de flancs latéraux (12a) reliés par une surface opposée au substrat (12b), et **en ce que** la première couche (13) est disposée sur le substrat (10) et sur l'électrolyte (12) de manière à recouvrir continûment lesdits flanc latéraux et ladite surface les reliant.

6. Procédé selon l'une quelconque des revendications 1 à 5, **caractérisée en ce qu'**une deuxième couche d'encapsulation (17) hermétique et électriquement isolante enrobe l'anode (15) et l'électrolyte (12).

7. Procédé selon l'une quelconque des revendications 1 à 6, **caractérisé en ce que** la deuxième couche (14) recouvre une portion de la première couche (13), ladite portion étant disposée sur le substrat (10).

8. Procédé selon l'une quelconque des revendications 1 à 7, **caractérisé en ce que** la première couche (13) est à base d'un matériau de la liste comportant Sn, Al, Au, Pt, le silicium dopé, et le germanium dopé.

9. Procédé selon l'une quelconque des revendications 1 à 8, **caractérisée en ce que** la deuxième couche (14) est à base d'un matériau de la liste comportant Ti, Ni, W, Cr et Mo.

10. Procédé selon l'une quelconque des revendications 1 à 9, **caractérisée en ce que** l'anode (15) a une épaisseur supérieure à 2 fois l'épaisseur de la première couche (13).

11. Procédé selon l'une quelconque des revendications 1 à 10, **caractérisée en ce que** l'épaisseur de l'anode (15) et l'épaisseur de la première couche (13) sont choisies de manière que le premier matériau soit consommé pour former le film (15') séparant l'électrolyte (12) et l'anode (15).

12. Microbatterie au lithium munie d'un substrat (10) recouvert successivement et dans l'ordre par une cathode (11), un électrolyte solide (12) à base de lithium, une première couche (13) électriquement conductrice en un premier matériau, la première couche (13) étant dépourvue de contact avec la cathode, la microbatterie comporant :
• une deuxième couche (14) électriquement conductrice et configurée pour former une barrière de diffusion aux atomes de lithium, la deuxième couche (14) étant connectée électriquement à la première couche (13) et laissant découverte au moins une partie (13d) de la première couche (13), ladite partie découverte (13d) faisant face à l'électrolyte (12) ;
• une anode (15) au lithium disposée sur les première (13) et deuxième (14) couches électriquement conductrices de manière à être en contact avec les première (13) et deuxième (14) couches, et de manière à laisser découverte une zone (14") de la deuxième couche (14) ;
• un contact électrique disposé sur ladite zone (14") de la deuxième couche (14), le contact étant distinct de l'anode.

13. Microbatterie au lithium selon la revendication 12 **caractérisée en ce qu'**elle comporte une première couche d'encapsulation (16) hermétique et électriquement isolante disposée sur la deuxième couche (14) de manière à séparer ladite zone (14"), de la première couche (13) et de l'anode (15).

14. Microbatterie au lithium selon l'une des revendications 12 et 13, **caractérisée en ce qu'**elle comporte une deuxième couche d'encapsulation (17) hermétique et électriquement isolante enrobant l'anode (15).

## Patentansprüche

1. Verfahren zur Herstellung einer Lithium-Mikrobatterie, das die folgenden Verfahrensschritte umfasst:
• Vorsehen eines Substrats (10), das nacheinander und in dieser Reihenfolge beschichtet wird mit:
- einer Kathode (11),
- einem Festkörper-Elektrolyt (12),
- einer ersten, elektrisch leitenden Schicht (13) aus einem ersten Material, wobei die erste Schicht (13) keinen Kontakt mit der Kathode (11) hat;
• Bilden einer zweiten, elektrisch leitenden Schicht (14), die so gestaltet ist, dass sie eine Diffusionssperre für die Lithium-Atome bildet, wobei die zweite Schicht (14) mit der ersten Schicht (13) elektrisch verbunden ist und mindestens einen Teil (13d) der ersten Schicht (13) unbedeckt lässt, wobei dieser Teil (13d) dem Elektrolyt (12) zugewandt ist;
• Aufbringen einer Lithium-Anode (15) durch elektrochemisches Verfahren, ausgehend von der Keimung aus der elektrisch leitenden ersten und zweiten Schicht (13, 14) dergestalt, dass mit der ersten Schicht (13) ein Film (15') gebildet wird, der Lithium und das erste Material enthält.

2. Verfahren nach Anspruch 1,
**dadurch gekennzeichnet,**
**dass** das erste Material dergestalt gewählt wird, dass der Film (15'), der Lithium und das erste Material enthält, die Zwischenschicht zwischen dem Festkörper-Elektrolyt (12) und der Anode (15) bildet.

3. Verfahren nach den Ansprüchen 1 und 2,
**dadurch gekennzeichnet,**
**dass** der Film (15') aus einer Legierung auf Basis von Lithium und Atomen des ersten Materials besteht.

4. Verfahren nach einem der Ansprüche 1 bis 3,
**dadurch gekennzeichnet,**
**dass** es einen Verfahrensschritt der Bildung einer ersten hermetisch dichten und elektrisch isolierenden Einkapselungsschicht (16) auf einem Abschnitt (14') der zweiten Schicht (14) beinhaltet, dergestalt dass die elektrochemische Ablagerung vermieden wird.

5. Verfahren nach einem der Ansprüche 1 bis 4,
**dadurch gekennzeichnet,**
**dass** der Elektrolyt (12) mit Seitenflanken (12a) versehen ist, die durch eine dem Substrat gegenüber liegende Oberfläche (12b) miteinander verbunden sind, und dass die erste Schicht (13) auf dem Substrat (10) und auf dem Elektrolyt (12) dergestalt angeordnet ist, dass sie die genannten Seitenflanken und die genannte diese verbindende Oberfläche lückenlos bedeckt.

6. Verfahren nach einem der Ansprüche 1 bis 5,
**dadurch gekennzeichnet,**
**dass** eine zweite hermetisch dichte und elektrisch isolierende Einkapselungsschicht (17) die Anode (15) und den Elektrolyt (12) umgibt.

7. Verfahren nach einem der Ansprüche 1 bis 6,
**dadurch gekennzeichnet,**
**dass** die zweite Schicht (14) einen Abschnitt der ersten Schicht (13) bedeckt, wobei der genannte Abschnitt auf dem Substrat (10) angeordnet ist.

8. Verfahren nach einem der Ansprüche 1 bis 7,
**dadurch gekennzeichnet,**
**dass** die erste Schicht (13) auf Basis eines Materials ausgeführt ist, das unter Sn, Al, Au, Pt, dotiertem Silicium und dotiertem Germanium gewählt ist.

9. Verfahren nach einem der Ansprüche 1 bis 8,
**dadurch gekennzeichnet,**
**dass** die zweite Schicht (14) auf Basis eines Materials ausgeführt ist, das unter Ti, Ni, W, Cr und Mo gewählt ist.

10. Verfahren nach einem der Ansprüche 1 bis 9,
**dadurch gekennzeichnet,**
**dass** die Anode (15) eine Stärke hat, die mehr als das Doppelte der Stärke der ersten Schicht (13) beträgt.

11. Verfahren nach einem der Ansprüche 1 bis 10,
**dadurch gekennzeichnet,**
**dass** die Stärke der Anode (15) und die Stärke der ersten Schicht (13) dergestalt gewählt sind, dass das erste Material verbraucht wird, um den Film (15') zu bilden, der den Elektrolyt (12) und die Anode (15) voneinander trennt.

12. Lithium-Mikrobatterie, die mit einem Substrat (10) versehen ist, das nacheinander und in dieser Reihenfolge beschichtet wird mit einer Kathode (11), einem Festkörper-Elektrolyt (12) auf Basis von Lithium, einer ersten, elektrisch leitenden Schicht (13) aus einem ersten Material, wobei die erste Schicht (13) keinen Kontakt mit der Kathode hat, wobei die Mikrobatterie enthält:
• eine zweite, elektrisch leitende Schicht (14), die so gestaltet ist, dass sie eine Diffusionssperre für die Lithium-Atome bildet, wobei die zweite Schicht (14) mit der ersten Schicht (13) elektrisch verbunden ist und mindestens einen Teil (13d) der ersten Schicht (13) unbedeckt lässt, wobei dieser unbedeckte Teil (13d) dem Elektrolyt (12) zugewandt ist;
• eine Lithium-Anode (15), die auf der elektrisch leitenden ersten und zweiten Schicht (13, 14) dergestalt angeordnet ist, dass sie mit der ersten und der zweiten Schicht (13, 14) in Kontakt ist, und dergestalt, dass sie einen Bereich (14") der zweiten Schicht (14) unbedeckt lässt;
• einen elektrischen Kontakt, der auf dem genannten Bereich (14") der zweiten Schicht (14) angeordnet ist, wobei der Kontakt von der Anode unterschieden ist.

13. Lithium-Mikrobatterie nach Anspruch 12,
**dadurch gekennzeichnet,**
**dass** sie eine erste hermetisch dichte und elektrisch isolierende Einkapselungsschicht (16) enthält, die auf der zweiten Schicht (14) dergestalt angeordnet ist, dass sie den genannten Bereich (14") von der ersten Schicht (13) und der Anode (15) trennt.

14. Lithium-Mikrobatterie nach einem der Ansprüche 12 und 13,
**dadurch gekennzeichnet,**
**dass** sie eine zweite hermetisch dichte und elektrisch isolierende Einkapselungsschicht (17) enthält, die die Anode (15) umgibt.

## Claims

1. A fabrication method of a lithium microbattery, comprising the following successive steps:
• providing a substrate (10) successively covered, and in order, by:
- a cathode (11);
- a solid electrolyte (12);
- a first electrically conducting layer (13) made from a first material, the first layer (13) being devoid of contact with the cathode (11);
• forming a second electrically conducting layer (14) configured to form a diffusion barrier for the lithium atoms, the second layer (14) being electrically connected to the first layer (13) and leaving at least a part (13d) of the first layer (13) uncovered, said part (13d) being facing the electrolyte (12);
• electrochemically depositing a lithium anode (15) from germination from the first (13) and second (14) electrically conducting layers so as to form a film (15') comprising lithium and the first material with the first layer (13).

2. The method according to claim 1, **characterized in that** the first material is chosen such that the film (15') comprising lithium and the first material forms the interface between the solid electrolyte (12) and the anode (15).

3. The method according to one of claims 1 and 2, **characterized in that** the film (15') is made from an alloy formed by lithium and atoms of the first material.

4. The method according to any one of claims 1 to 3, **characterized in that** it comprises a formation step of a first hermetic and electrically insulating encapsulation layer (16) on a portion (14') of the second layer (14) so as to prevent electrochemical deposition.

5. The method according to any one of claims 1 to 4, **characterized in that** the electrolyte (12) is provided with lateral flanks (12a) connected by a surface opposite to the substrate (12b), and **in that** the first layer (13) is arranged on the substrate (10) and on the electrolyte (12) so as to cover in continuous manner said lateral flanks and said surface joining the latter.

6. The method according to any one of claims 1 to 5, **characterized in that** a second hermetic and electrically insulating encapsulation layer (17) coats the anode (15) and the electrolyte (12).

7. The method according to any one of claims 1 to 6, **characterized in that** the second layer (14) covers a portion of the first layer (13), said portion being arranged on the substrate (10).

8. The method according to any one of claims 1 to 7, **characterized in that** the first layer (13) is made from a material from the list comprising Sn, Al, Au and Pt, doped silicon, and doped germanium.

9. The method according to any one of claims 1 to 8, **characterized in that** the second layer (14) is made from a material from the list comprising Ti, Ni, W, Cr and Mo.

10. The method according to any one of claims 1 to 9, **characterized in that** the anode (15) has a thickness greater than twice the thickness of the first layer (13).

11. The method according to any one of claims 1 to 10, **characterized in that** the thickness of the anode (15) and the thickness of the first layer (13) are chosen such that the first material is consumed to form the film (15') separating the electrolyte (12) and the anode (15).

12. A lithium microbattery provided with a substrate (10) successively covered, and in order, by a cathode (11), a lithium-based solid electrolyte (12), and a first electrically conducting layer (13) made from a material, the first layer (13) being devoid of contact with the cathode, the microbattery comprising:
• a second electrically conducting layer (14) configured to form a diffusion barrier for the lithium atoms, the second layer (14) being electrically connected to the first layer (13) and leaving at least a part (13d) of the first layer (13) uncovered, said uncovered part (13d) facing the electrolyte (12);
• a lithium anode (15) arranged on the first (13) and second (14) electrically conducting layers so as to be in contact with the first (13) and second (14) layers and so as to leave an area (14") of the second layer (14) uncovered;
• an electric contact arranged on said area (14") of the second layer (14), the contact being distinct from the anode.

13. The lithium microbattery according to claim 12, **characterized in that** it comprises a first hermetic and electrically insulating encapsulation layer (16) arranged on the second layer (14) so as to separate said area (14") from the first layer (13) and from the anode (15).

14. The lithium microbattery according to one of claims 12 and 13, **characterized in that** it comprises a second hermetic and electrically insulating encapsulation layer (17) coating the anode (15).
